# EUROPEAN PATENT SPECIFICATION

(11) **EP 1 615 090 B1**
(45) Date of publication and mention of the grant of the patent: **20.02.2008**
(21) Application number: 04380144.8
(22) Date of filing: 10.07.2004
(51) Int. Cl.: G05B 19/418, B21D 43/05

(54) **Synchronized control system of a line of machines, particularly presses**
Vorrichtung zur synchronisierten Steuerung einer Reihe von Maschinen, insbesondere von Pressen
Dispositif de commande synchronisée d'une chaîne de machines, en particulier de presses

(43) Date of publication of application: 11.01.2006
(73) Proprietor: FAGOR, S.COOP., 20500 Mondragon (Gipuzkoa) (ES)
(72) Inventor: Agirrezabal Ondarra, Pedro, 20570 Bergara (Gipuzkoa) (ES)
(74) Representative: Fernandez Guzman, Juan

(56) References cited:
- EP-A- 0 047 056
- EP-A- 0 434 632
- US-A- 3 557 686
- US-A- 3 948 162

## Description

### TECHNICAL FIELD

The present invention relates to control systems of lines of machines and more specifically to control systems of lines of presses.

### PRIOR ART

Lines of presses and analogous machines used to carry out a process to form pieces, mainly metal plates, are already known. In each of the presses a specific forming operation is conducted on the pieces, which are then transferred successively between lines of presses by piece transfer devices such as crossbars or various types of piece handling robots. Said piece transfer devices are positioned between the presses in the line and link the press immediately upstream and the press immediately downstream so that the pieces can be transferred between said presses.

Each press comprises a slide which performs a cyclical movement between an inoperative and an operative position so that the corresponding forming operation can be performed. The cyclical movement of the slide can be represented by a cyclogram in which an angle of 0° usually corresponds to the top dead centre of said slide.

One complete stroke of the slide equates to one complete rotation of the cyclogram and each angle on the cyclogram corresponds to a specific position of the slide with bottom dead centre, for example, corresponding to an angle of 180°.

Systems controlling the operation of lines of presses are already known. When carrying out this control process it must be taken into consideration that the path of each piece transfer device passes through a first region of interference in which said piece transfer device may interfere with the slide of the press immediately upstream, and then passes through a second region of interference in which said piece transfer device may interfere with the slide of the press immediately downstream.

EP 0434632 A2 describes a machine and a method for controlling the operation of a line of machines, particularly presses. In this machine the operating cycles of the presses and the piece transfer devices of the line are synchronised. The operating cycle of the first press of the line is taken as the reference with the cycles of the other presses and the piece transfer devices being obtained in a cascade process.

In the machine described above each piece transfer device starts running when the slide of the press immediately upstream reaches a certain point. Similarly, the slide of each machine downstream from the first machine starts to move cyclically when the piece transfer device immediately downstream reaches a certain point. As a result, the presses and the piece transfer devices are synchronised by a system of "semaphores". This ensures that the adjoining presses and piece transfer devices do not collide with each other.

Furthermore, the first press in the line of presses described above operates continuously, i.e. the slide does not stop at top dead centre. However, the slide in the other presses performs the cyclical movement and does stop at top dead centre until it receives the signal telling it that the piece transfer device immediately upstream has deposited the piece and has withdrawn to a certain point.

### DISCLOSURE OF THE INVENTION

The main object of the invention is to provide a synchronised control system of a line of presses or analogous machines that allows the presses and the piece transfer devices used to transfer the pieces between the presses to operate continuously, i.e. without stops and starts occuring during synchronised operation.

In the synchronised control system of the invention an optimal piece collection path in relation to the cyclogram of the slide of the press immediately upstream is set for each piece transfer device, in addition to an optimal piece positioning path in relation to the cyclogram of the slide of the press immediately downstream. This ensures that the synchronisation of the presses and the piece transfer devices is achieved by adjusting the path of each piece transfer device to the aforementioned optimal collection path and to the aforementioned optimal positioning path.

In the control system of the invention if there are phase lags, i.e. if a piece transfer device moves too quickly or slowly in relation to the press immediately upstream or the press immediately downstream, said phase lags are not compensated for by stopping the piece transfer device repeatedly but by adapting the path of the piece transfer device to the corresponding optimal path with the speed of the piece transfer device in question thus being changed as a result.

The synchronised control system allows both the piece transfer devices and the presses to operate continuously. As the piece transfer devices and the presses do not need to be stopped and started again and again the amount of energy consumed by the line of presses is reduced. In addition, the fact that the presses operate continuously reduces wear on the components in said presses, i.e. clutches, brakes, gears, etc. The useful life of the presses is thus extended.

Furthermore, by adapting the path of the piece transfer devices to the cyclograms of the presses immediately upstream and downstream, when dimensioning the line of presses it is possible to select presses operating at a rate that the piece transfer devices immediately upstream and downstream can also operate at, thus avoiding overdimensioning, i.e. the use of presses with operating rates that cannot be used in practice. This prevents unnecessary costs.

### DESCRIPTION OF THE DRAWINGS

FIGURE 1 shows a line of presses containing a plurality of presses and piece transfer devices.
FIGURE 2 shows a press in a line of presses, the piece positioning path of the piece transfer device immediately upstream and the piece collection path of the piece transfer device immediately downstream.
FIGURE 3 shows the cyclogram of the press detailed in FIGURE 2 with the piece collection path of the piece transfer device immediately downstream.
FIGURE 4 shows two consecutive presses in a line of presses and the path of the piece transfer device positioned between them.
FIGURE 5A shows the cyclogram of the first press detailed in FIGURE 4 with the path of the intermediate piece transfer device.
FIGURE 5B shows the cyclogram of the second press detailed in FIGURE 4 with the path of the intermediate piece transfer device.
FIGURE 6 shows, from the moment the line starts up, the operating sequence of the first three presses in a line of presses and of the piece transfer devices positioned between said presses.

### DETAILED DESCRIPTION OF THE INVENTION

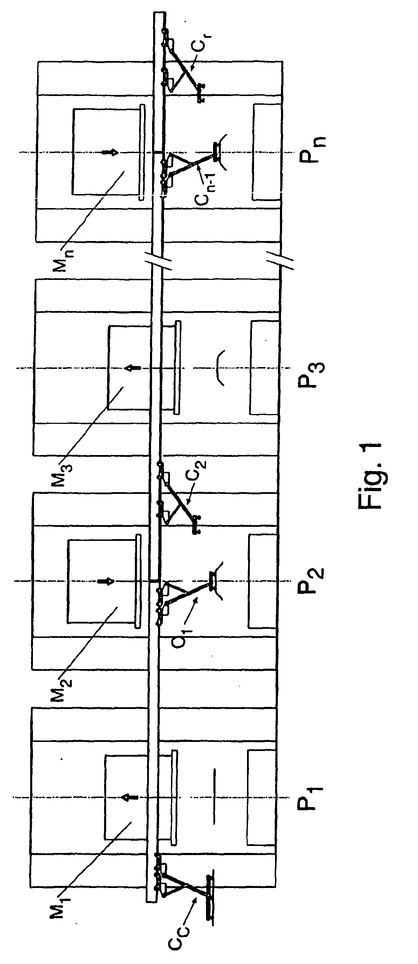

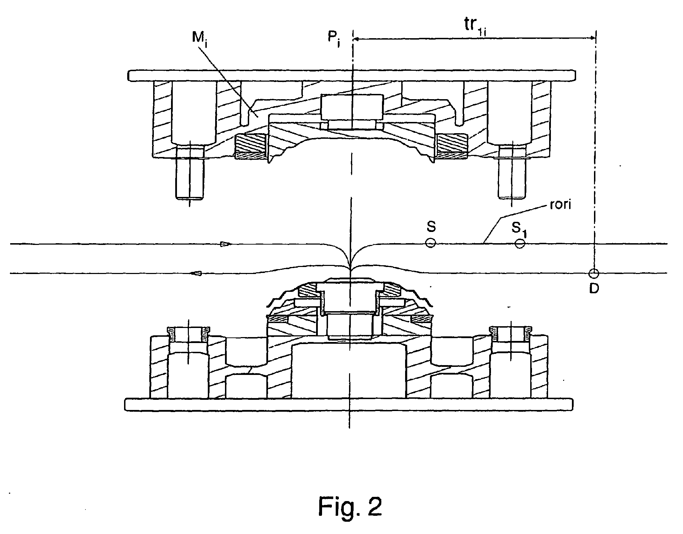

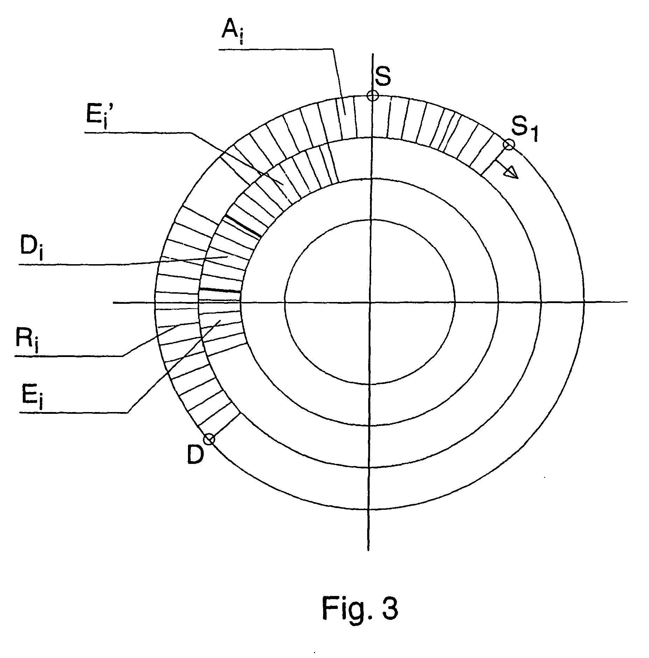

The synchronised control system of the invention is applied to lines of presses and to analogous lines of forming machines. With reference to figure 1, the lines of presses comprise a plurality of presses (P1, P2,..., Pn) with each of the presses (P1, P2,..., Pn) comprising a slide (M1, M2,..., Mn) which performs a cyclical movement between an inoperative and an operative position. Figure 2 shows a press (Pi) with said characteristics. With reference to figure 3, the cyclical movement of each slide (Mi) is represented by a cyclogram in which an angle of 0° usually corresponds to the top dead centre (S) of the slide (Mi).

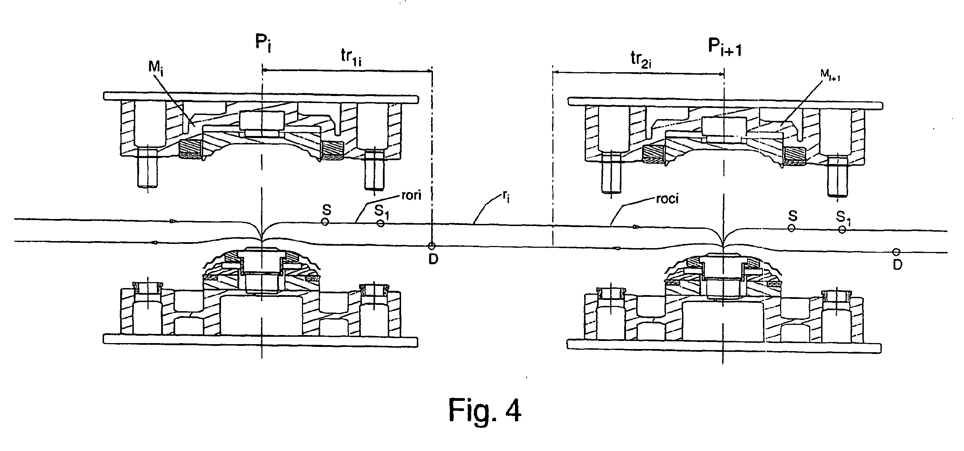

The lines of presses also comprise a plurality of piece transfer devices (C1, C2,..., Cn-1) positioned between the presses (P1, P2,..., Pn) in order to transfer pieces between said presses (P1, P2,..., Pn) with each piece transfer device (Ci) performing a path (ri) between the press (Pi) immediately upstream and the press (Pi+1) immediately downstream to transfer the pieces, as shown in figure 4. This path (ri) passes through a first region of interference (tr1i) in which said piece transfer device (Ci) may interfere with the slide (Mi) of the press (Pi) immediately upstream, and then through a second region of interference (tr2i) in which said piece transfer device (Ci) may interfere with the slide (Mi+1) of the press (Pi+1) immediately downstream.

For each piece transfer device (Ci) the control system of the invention establishes an optimal piece collection path (rori) in relation to the cyclogram of the slide (Mi) of the press (Pi) immediately upstream, and an optimal piece positioning path (roci) in relation to the cyclogram of the slide (Mi+1) of the press (Pi+1) immediately downstream. This ensures that the synchronisation of the presses (P1, P2,..., Pn) and the piece transfer devices (C1, C2,..., Cn-1) is achieved by adjusting the path (ri) of each piece transfer device (Ci) to the aforementioned optimal collection path (rori) and to the aforementioned optimal positioning path (roci). Said path (ri) corresponds with the optimal collection path (rori) in the first region of interference (tr1i) and corresponds with the optimal positioning path (roci) in the second region of interference (tr2i).

Figure 3 shows, by way of example, the cyclogram of the slide (Mi) of the press (Pi) with the optimal collection path of the piece transfer device (Ci). The points at which the piece transfer device (Ci) has to advance, withdraw, lift up and descend are set in this cyclogram. More specifically, a withdrawal region (Ri) extending from point D up to the point at which the piece is collected is set along with an advance region (Ai), extending from this point up to a point (S1) along its path, a first elevation region (Ei), a descent region (Di) to access the piece and a second elevation region (Ei') to lift the piece up.

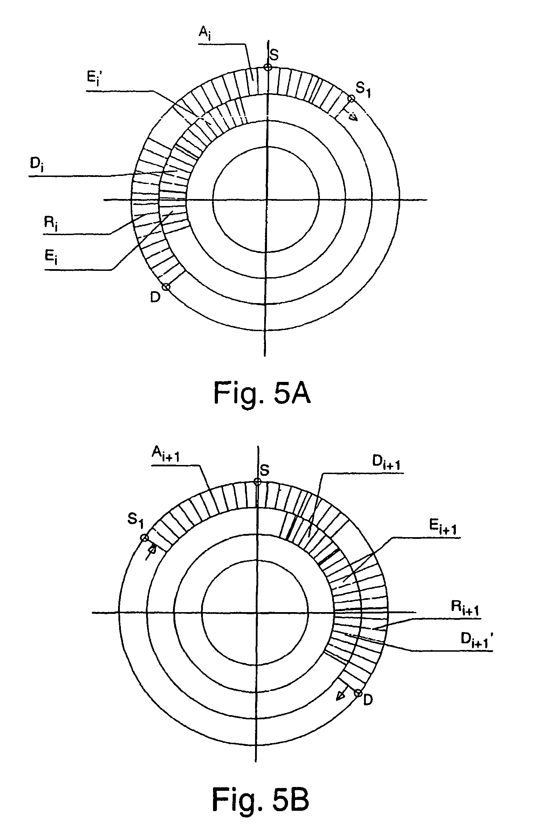

With reference to figures 4, 5A and 5B, an optimal collection path (rori) is set for each piece transfer device (Ci) in accordance with the cyclogram of the slide (Mi) of the press (Pi) (see figure 5A) and an optimal positioning path (roci) in accordance with the cyclogram of the slide (Mi+1) of the press (Pi+1) (see figure 5B). The corresponding advance (Ai and Ai+1), withdrawal (Ri and Ri+1), descent (Di, Di+1 and Di+1') and elevation (Ei, Ei' and Ei+1) regions are set in each cyclogram. The path (ri) of the piece transfer device is adjusted to said paths (rori and roci).

With reference to figure 1, the line of presses also comprises a piece transfer device (Cc) to position the piece in the press (P1) and a piece transfer device (Cr) to collect the piece from the press (Pn) once the forming process is complete. The piece transfer device (Cc) moves in accordance with an optimal positioning path set in relation to the cyclogram of the slide (M1) of the press (P1) and the piece transfer device (Cr) moves in accordance with an optimal collecting path set in relation to the cyclogram of the slide (Mn) of the press (Pn).

In the control system of the invention, when the presses (P1, P2,...,Pn) are synchronised along with the piece transfer devices (C1, C2,..., Cn-1) each piece transfer device (Ci) moves continuously all the way along its path (ri) and the slides (Mi) of each press (Pi) perform the cyclical movement continuously without stopping at top dead centre unless the piece transfer device (Ci-1) immediately upstream is delayed for too long.

In addition, to ensure the slides (Mi) of each press (Pi) perform the cyclical movement continuously from the moment each slide (Mi) starts up, the delay (ti) is set, for each slide (Mi) except the slide (M1) of the first press (P1), following start-up until its programmed speed is reached with each slide (Mi) starting up beforehand in order to compensate for the delay (ti).

The following test is used to set the delay (ti) for each press (Pi): a piece is formed in the first press (P1) which stops at top dead centre. The piece transfer device (C1) takes this piece and follows the optimal positioning path at the minimum speed at which the piece can be processed and positions the piece in the next press (P2). A start-up signal is sent to this press (P2) when the piece transfer device (C1) reaches, along its path, the point of the cyclogram at which the press (P2) is located. The degrees of phase lag between the actual cyclogram of the slide (M2) until it reaches the programmed speed are compared with the cyclogram corresponding to the slide (M2) when it operates continuously. Said degrees of phase lag are saved in a database along with the other setting data for the slide (M2). As a result, a delay time (t2) that corresponds with said degrees of phase lag is taken into consideration in the start-up of the slide (M2). This process is then repeated for the remaining presses (P3,..., Pn) with the respective delay times (t3,..., tn) being obtained.

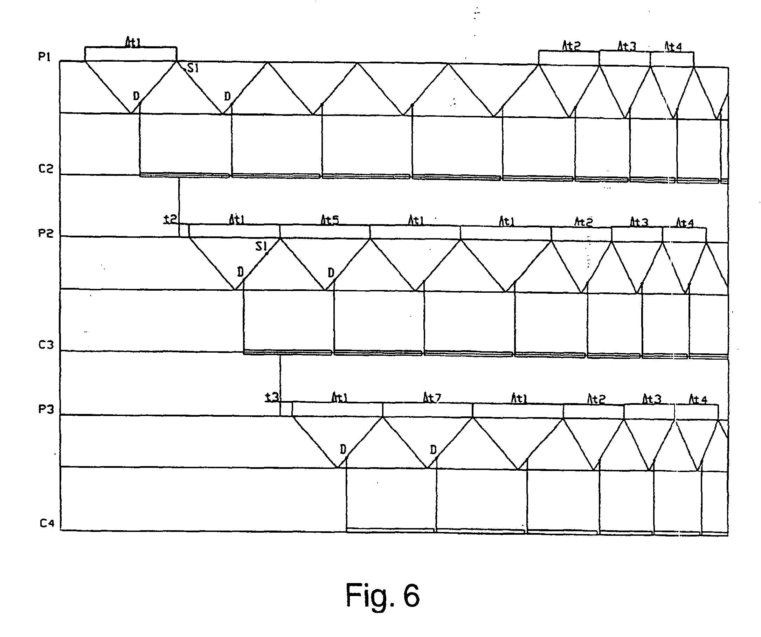

Figure 6 shows, from the moment the line starts up, the operating sequence of the first three presses (P1, P2 and P3) of a line of presses and of the piece transfer devices (C2, C3 and C4). With reference to figure 6, the presses (P1, P2 and P3) and the piece transfer devices (C2, C3 and C4) operate continuously.

To begin with the press (P1) starts operating at a low rate. The press (P1) maintains this low rate until the other presses detailed in figure 6, P2 and P3, also reach the same rate. To achieve this the speed of the slides (M2 and M3) of the presses (P2 and P3) alters slightly in each path resulting in a cycle with shorter Λt5 and Λt7 times respectively than those obtained with the rate of P1. The rate of P1 gradually increases until it reaches the programmed rate or a rate at which some of the piece transfer devices (Ci) are close to their operating limit. As a result, the rate of the presses (P2, P3,..., Pn) increases gradually and in a synchronised manner with the press (Pi-1) immediately upstream being taken as the reference at all times for each press (Pi).

With reference to figure 6, the delay (ti) is taken into account after the corresponding press (Pi) starts up until the programmed speed is reached. For the press (P2) therefore, the start-up order is given with an advance time (t2). This time (t2) is the delay corresponding to the press (P2). Similarly, the start-up order for the press (P3) is given with an advance time of t3.

In the control system of the invention, once the piece transfer device (Ci) has collected a piece in the press (Pi) immediately upstream and reaches a point (S1), its path (ri) is compared with the optimal positioning path (roci) and:
- If the path (ri) coincides with the optimal positioning path (roci), the piece transfer device (Ci) continues along the path (ri).
- If the path (ri) moves ahead of the optimal positioning path (roci), the speed of the piece transfer device (Ci) decreases to allow it to adjust to the optimal positioning path (roci).
- If the piece transfer device (Ci) falls behind in relation to the optimal positioning path (roci), the speed of the piece transfer device (Ci) increases so that it can adjust to the optimal positioning path (roci). If, in addition, the piece transfer device (Ci) falls behind in relation to the optimal positioning path (roci) by more than the maximum connection value (Xi), the slide (Mi+1) of the press (Pi+1) immediately upstream stops at top dead centre for a sufficient period of time to enable the piece transfer device (Ci) to adjust to the optimal positioning path (roci).

The maximum connection value (Xi) is the maximum delay that the piece transfer device (Ci) may accumulate to enable it to synchronise itself once more with the press (Pi+1) without said press (Pi+1) having to stop.

If the piece transfer device (Ci) falls behind in relation to the optimal positioning path (roci), the rate of the slide (Mi+1) of the press (Pi+1) immediately downstream drops, e.g. a quarter of a cycle. If the piece transfer device (Ci) is still behind in relation to the optimal positioning path (roci) in the following cycle, the rate of the slide (Mi+1) drops again, e.g. a further quarter of a cycle and so on until the press (Pi+1) operates continuously in synchronisation with the piece transfer device (Ci). If the piece transfer device (Ci) runs ahead in relation to the optimal positioning path (roci), analogous action is taken with the rate of the slide (Mi+1) of the press (Pi+1) increasing instead of decreasing.

## Claims

1. Method for the synchronized control of a line of presses or analogous machines with said line of presses comprising
a plurality of presses (P1,P2,...,Pn) or analogous machines for the forming of pieces, each of the presses (P1, P2,..., Pn) comprising a slide (M1, M2,..., Mn) that performs a cyclical movement between an inoperative and an operative position that can be represented by a cyclogram in which an angle of 0° usually corresponds to the top dead centre of the corresponding slide (M1,M2,...,Mn),
and a plurality of piece transfer devices (C1,C2,...,Cn-1) positioned between the presses (P1,P2,...,Pn) in order to transfer the pieces between said presses (P1,P2,...,Pn) with the piece transfer device (Ci) performing a path (ri) between the press (Pi) immediately upstream and the press (Pi+1) immediately downstream to achieve this, with said path (ri) passing through a first region of interference (tr1i) in which said piece transfer device (Ci) may interfere with the slide (Mi) of the press (Pi) immediately upstream, and through a second region of interference (tr2i) in which said piece transfer device (Ci) may interfere with the slide (Mi+1) of the press (Pi+1) immediately downstream,
wherein an optimal piece collection path (rori) is set for each piece transfer device (Ci) in relation to the cyclogram of the slide (Mi) of the press (Pi) immediately upstream, and an optimal piece positioning path (roci) is set in relation to the cyclogram of the slide (Mi+1) of the press (Pi+1) immediately downstream, so that the synchronisation of the presses (P1,P2,...,Pn) and the piece transfer devices (C1,C2,...,Cn-1) is achieved by adjusting the path (ri) of each piece transfer device (Ci) to said optimal collection path (rori) and to said optimal positioning path (roci), with said path (ri) corresponding with the optimal collection path (rori) in the first region of interference (tr1i) and with said path (ri) corresponding with the optimal positioning path (roci) in the second region of interference (tr2i),
**characterised in that**, when the presses (P1, P2,...,Pn) and the piece transfer devices (C1, C2,..., Cn-1) are synchronised, the slides (Mi) of each press (Pi) perform the cyclical movement continuously without stopping at the top dead centre unless the piece transfer device (Ci-1) immediately upstream is delayed for too long.

2. Method according to claim 1, wherein, when the presses (P1, P2,...,Pn) and the piece transfer devices (C1, C2,..., Cn-1) are synchronised, each piece transfer device (Ci) moves continuously all the way along its path (ri).

3. Method according to claim 2 wherein, to ensure that the slides (Mi) of each press (Pi) perform the cyclical movement continuously from the moment each slide (Mi) starts up, the delay (ti) following start-up until a programmed speed is reached is set for each slide (Mi) except the slide (M1) of the first press (P1), with each slide (Mi) starting up beforehand in order to compensate for said delay (ti).

4. Method according to any of the preceding claims wherein, once the piece transfer device (Ci) has collected a piece in the press (Pi) immediately upstream and reaches a point (S1), its path (ri) is compared with the optimal positioning path (roci) and:
if the path (ri) coincides with the optimal positioning path (roci), the piece transfer device (Ci) continues along said path (ri),
if path (ri) moves ahead of the optimal positioning path (roci), the speed of the piece transfer device (Ci) decreases to allow it to adjust to the optimal positioning path (roci),
if the piece transfer device (Ci) falls behind in relation to the optimal positioning path (roci), the speed of the piece transfer device (Ci) increases so that it can adjust to the optimal positioning path (roci), and
if the piece transfer device (Ci) falls behind in relation to the optimal positioning path (roci) by more than a maximum connection value (Xi), the slide (Mi+1) of the press (Pi+1) immediately upstream stops at the top dead centre for a sufficient period of time to enable the piece transfer device (Ci) to adjust to the optimal positioning path (roci).

5. Method according to claim 4 wherein, if the piece transfer device (Ci) falls behind in relation to the optimal positioning path (roci), the rate of the slide (Mi+1) of the press (Pi+1) immediately upstream drops.

6. Method according to claim 4 wherein if the piece transfer device (Ci) moves ahead in relation to the optimal positioning path (roci), the rate of the slide (Mi+1) of the press (Pi+1) immediately downstream increases.

7. A line press **characterised in that** it is controlled according with the method defined in any of the preceding claims.

## Patentansprüche

1. Methode für die synchronisierte Steuerung einer Linie mit Pressen oder analogen Maschinen, die Linie der Pressen umfassend
eine Reihe von Pressen (P1,P2,...,Pn) oder analogen Maschinen zum Formen von Teilen, wobei jede der Pressen (P1,P2,...,Pn) ein Gleitstück (M1,M2,...,Mn) umfasst, dass eine zyklische Bewegung zwischen einer nicht operativen und einer operativen Stellung ausführt, die anhand eines Zyklogramms dargestellt werden kann, in dem ein 0°-Winkel üblicherweise dem oberen Todpunkt des jeweiligen Gleitstücks (M1,M2,...,Mn) entspricht,
und eine Reihe von Vorrichtungen für die Teilebeförderung (C1,C2,...,Cn-1), die zwischen den Pressen (P1,P2,...,Pn) angeordnet sind, um die Teile zwischen den Pressen (P1,P2,...,Pn) zu befördern, wobei die Vorrichtung für die Teilebeförderung (Ci) einen Weg (ri) zwischen der Presse (Pi) unmittelbar danach und der Presse (Pi+1) unmittelbar davor zurücklegt, um das zu erreichen, wobei der Weg (ri) einen ersten Überlagerungsbereich (tr1i) durchläuft, in dem die Vorrichtung für die Teilebeförderung (Ci) sich über das Gleitstück (Mi) der unmittelbar nachfolgenden Presse (Pi) überlagern kann, und durch einen zweiten Überlagerungsbereich (tr2i), in dem die Vorrichtung für die Teilebeförderung (Ci) sich mit dem Gleitstück (Mi+1) der unmittelbar vorausgehenden Presse (Pi+1) überlagern kann,
wobei ein optimaler Weg für die Teileaufnahme (rori) für jede Vorrichtung für die Teilebeförderung (Ci) in Bezug auf das Zyklogramm des Gleitstücks (Mi) der unmittelbar nachfolgenden Presse (Pi) eingestellt ist, und ein optimaler Weg für die Teilepositionierung (roci) in Bezug auf das Zyklogramm des Gleitstücks (Mi+1) der unmittelbar vorausgehenden Presse (Pi+1) eingestellt ist, so dass die Synchronisierung der Pressen (P1,P2,...,Pn) und der Vorrichtungen für die Teilebeförderung (C1,C2,...,Cn-1) durch die Einstellung des Wegs (ri) einer jeden Vorrichtung für die Teilebeförderung (Ci) zum optimalen Aufnahmeweg (rori) und dem optimalen Weg für die Positionierung (roci) erreicht wird, wobei der Weg (ri) dem optimalen Weg für die Aufnahme (rori) im ersten Überlagerungsbereich (tr1i) und der Weg (ri) dem optimalen Weg für die Positionierung (roci) im zweiten Überlagerungsbereich (tr2i)entspricht,
**dadurch gekennzeichnet, dass**, wenn die Pressen (P1, P2,...,Pn) und die Vorrichtungen für die Teilebeförderung (C1, C2,..., Cn-1) synchronisiert sind, die Gleitstücke (Mi) einer jeden Presse (Pi) die zyklische Bewegung kontinuierlich und ohne Halt am oberen Todpunkt ausführen, außer die unmittelbar nachfolgende Vorrichtung für die Teilebeförderung (Ci-1) verzögert sich zu lang.

2. Methode gemäß Anspruch 1, wobei, wenn die Pressen (P1, P2,...,Pn) und die Vorrichtungen für die Teilebeförderung (C1, C2,..., Cn-1) synchronisiert sind, sich jede Vorrichtung für die Teilebeförderung (Ci) kontinuierlich entlang seines Wegs (ri) bewegt.

3. Methode gemäß Anspruch 2, wobei, um sicherzustellen, dass die Gleitstücke (Mi) einer jeden Presse (Pi) die zyklische Bewegung von dem Zeitpunkt an, in dem jedes Gleitstück (Mi) startet kontinuierlich ausführen, die Verzögerung (ti) nach dem Start bis eine programmierte Geschwindigkeit erreicht ist, für jedes Gleitstück (Mi) eingestellt wird, mit Ausnahme des Gleitstücks (M1) der ersten Presse (P1), wobei jedes Gleitstück (Mi) vorher startet, um die Verzögerung (ti) auszugleichen.

4. Methode gemäß einem der vorausgehenden Ansprüche, wobei, sobald die Vorrichtung für die Teilebeförderung (Ci) ein Teil in der unmittelbar nachfolgenden Presse (Pi) aufgenommen hat und einen Punkt (S1) erreicht, ihr Weg (ri) mit dem optimalen Weg für die Positionierung (roci) verglichen wird und:
wenn der Weg (ri) mit dem optimalen Weg für die Positionierung (roci) übereinstimmt, die Vorrichtung für die Teilebeförderung (Ci) diesen Weg (ri) weiterhin verfolgt,
wenn sich der Weg (ri) vor dem optimalen Weg für die Positionierung (roci) bewegt, die Geschwindigkeit der Vorrichtung für die Teilebeförderung (Ci) verringert wird, um die Einstellung des optimalen Wegs für die Positionierung (roci) zu erreichen,
wenn die Vorrichtung für die Teilebeförderung (Ci) im Verhältnis zum optimalen Weg für die Positionierung (roci) zurückbleibt, die Geschwindigkeit der Vorrichtung für die Teilebeförderung (Ci) erhöht wird, so dass sie den optimalen Weg für die Positionierung (roci) einstellen kann, und
wenn die Vorrichtung für die Teilebeförderung (Ci) im Verhältnis zum optimalen Weg für die Positionierung (roci) um mehr als einen maximal zulässigen Anschlusswert (Xi) zurückfällt, das Gleitstück (Mi+1) der unmittelbar folgenden Presse (Pi+1) am oberen Todpunkt ausreichend lang anhält, damit die Vorrichtung für die Teilebeförderung (Ci) den optimalen Weg für die Positionierung (roci) erreichen kann.

5. Methode gemäß Anspruch 4, wobei, wenn die Vorrichtung für die Teilebeförderung (Ci) im Verhältnis zum optimalen Weg für die Positionierung (roci) zurückfällt, die Geschwindigkeit des Gleitstücks (Mi+1) der unmittelbar folgenden Presse (Pi+1) abfällt.

6. Methode gemäß Anspruch 4, wobei, wenn die Vorrichtung für die Teilebeförderung (Ci) im Verhältnis zum optimalen Weg für die Positionierung (roci) voraus ist, die Geschwindigkeit des Gleitstücks (Mi+1) der unmittelbar vorausgehenden Presse (Pi+1) zunimmt.

7. Eine Pressenlinie, **dadurch gekennzeichnet, dass** sie nach der in einem der vorausgehenden Ansprüchen beschriebenen Methode gesteuert wird.

## Revendications

1. Méthode destinée au contrôle synchronisé d'une gamme de presses ou de machines analogues, ladite gamme de presses comprenant
une pluralité de presses (P1,P2,...,Pn) ou de machines analogues pour la formation de pièces, chacune de ces presses (P1,P2,...,Pn) comprenant une coulisse (M1,M2,...,Mn) qui exécute un mouvement cyclique entre une position inopérante et opérante qui peut être représentée par un cyclogramme dans lequel un angle de 0° correspond habituellement au point mort supérieur de la coulisse correspondante (M1,M2,...,Mn),
et une pluralité de dispositifs de transfert de pièces (C1,C2,...,Cn-1) positionnés entre les presses (P1,P2,...,Pn) afin de transférer les pièces entre lesdites presses (P1,P2,...,Pn) à l'aide du dispositif de transfert des pièces (Ci) qui parcourt un chemin (ri) entre la presse (Pi) qui se trouve immédiatement en amont et la presse (Pi+1) placée immédiatement en aval pour y parvenir, ledit chemin (ri) traversant une première zone d'interférences (tr1i) dans laquelle ledit dispositif de transfert de pièces (Ci) peut créer des interférences avec la coulisse (Mi) de la presse (Pi) placée immédiatement en amont et traversant une seconde zone d'interférences (tr2i) dans laquelle ledit dispositif de transfert des pièces (Ci) peut créer des interférences avec la coulisse (Mi+1) de la presse (Pi+1) qui se trouve immédiatement en aval,
où un chemin de collecte de pièces optimal (rori) est défini pour chaque dispositif de transfert de pièces (Ci) par rapport au cyclogramme de la coulisse (Mi) de la presse (Pi) placée immédiatement en amont et un chemin de positionnement de pièces optimal (roci) est défini par rapport au cyclogramme de la coulisse (Mi+1) de la presse (Pi+1) placée immédiatement en aval, de telle manière que la synchronisation des presses (P1,P2,...,Pn) et des dispositifs de transfert des pièces (C1,C2,...,Cn-1) s'effectue en réglant le chemin (ri) de chaque dispositif de transfert des pièces (Ci) sur ledit chemin de collecte optimal (rori) et sur ledit chemin de positionnement optimal (roci), ledit chemin (ri) correspondant au chemin de collecte optimal (rori) de la première zone d'interférences (tr1i) et ledit chemin (ri) correspondant au chemin de positionnement optimal (roci) de la seconde zone des interférences (tr2i),
**caractérisée en ce que**, lorsque les presses (P1, P2,...,Pn) et les dispositifs de transfert des pièces (C1, C2,..., Cn-1) sont synchronisés, les coulisses (Mi) de chaque presse (Pi) exécutent continuellement le mouvement cyclique sans s'arrêter au point mort supérieur à moins que le dispositif de transfert des pièces (Ci-1) place immédiatement en amont est retardé pendant trop longtemps.

2. Méthode selon la revendication 1, où, lorsque les presses (P1, P2,...,Pn) et les dispositifs de transfert des pièces (C1, C2,..., Cn-1) sont synchronisés, chaque dispositif de transfert des pièces (Ci) se déplace continuellement sur toute la longueur du chemin (ri).

3. Méthode selon la revendication 2 où, pour garantir que les coulisses (Mi) de chaque presse (Pi) exécutent le mouvement cyclique continuellement dès l'instant où chaque coulisse (Mi) se met en marche, il y a un retard (ti) suivant le démarrage jusqu'à ce qu'une vitesse programmée ait été définie pour chaque coulisse (Mi) à l'exception de la coulisse (M1) de la première presse (P1), chaque coulisse (Mi) démarrant avant le moment défini pour compenser ledit retard (ti).

4. Méthode selon l'une quelconque des revendications précédents où, une fois que le dispositif de transfert des pièces (Ci) a collecté une pièce dans la presse (Pi) qui se trouve immédiatement en amont et a atteint un point (S1), son chemin (ri) est compare au chemin de positionnement optimal (roci) et :
si le chemin (ri) coïncide avec le chemin de positionnement optimal (roci), le dispositif de transfert des pièces (Ci) poursuit son déplacement sur ledit chemin (ri),
si le chemin (ri) va au-delà du chemin de positionnement optimal (roci), la vitesse du dispositif de transfert des pièces (Ci) décroît pour lui permettre de se positionner sur le chemin de positionnement optimal (roci),
si le dispositif de transfert des pièces (Ci) reste en arrière sur le chemin de positionnement optimal (roci), la vitesse du dispositif de transfert des pièces (Ci) augmente de telle manière qu'elle peut s'ajuster sur le chemin de positionnement optimal (roci) et
si le dispositif de transfert des pièces (Ci) reste en arrière par rapport au chemin de positionnement optimal (roci) de plus d'une valeur de connexion maximale (Xi), la coulisse (Mi+1) de la presse (Pi+1) immédiatement en amont s'arrête au point mort supérieur pendant une période de temps suffisante pour activer le dispositif de transfert des pièces (Ci) pour le régler sur le chemin de positionnement optimal (roci).

5. Méthode selon la revendication 4 où, si le dispositif de transfert des pièces (Ci) reste en arrière par rapport au chemin de positionnement optimal (roci), la vitesse de la coulisse (Mi+1) de la presse (Pi+1) immédiatement en amont chute.

6. Méthode selon la revendication 4 où, si le dispositif de transfert des pièces (Ci) est en avant par rapport au chemin de positionnement optimal (roci), la vitesse de la coulisse (Mi+1) de la presse (Pi+1) immédiatement en aval augmente.

7. Une gamme de presses **caractérisée en ce qu'**elle est contrôlée conformément à la méthode définie dans l'une quelconque des revendications précédentes.
